# EUROPÄISCHE PATENTSCHRIFT

(11) **EP 1 834 512 B1**
(45) Veröffentlichungstag und Bekanntmachung des Hinweises auf die Patenterteilung: **05.08.2009**
(21) Anmeldenummer: 05811116.2
(22) Anmeldetag: 09.11.2005
(51) Int. Cl.: H05B 37/02, G05B 19/042

(54) **VERFAHREN ZUR REGELUNG DER HINTERGRUNDBELEUCHTUNG EINES DISPLAYS**
METHOD FOR CONTROLLING THE BACK LIGHTING OF A DISPLAY
PROCEDE DE REGLAGE DU RETRO-ECLAIRAGE D'UN ECRAN

(30) Priorität: 30.12.2004 DE 102004063594
(43) Veröffentlichungstag der Anmeldung: 19.09.2007
(73) Patentinhaber: BSH Bosch und Siemens Hausgeräte GmbH, 81739 München (DE)
(72) Erfinder: LORENZ, Tilmann, 93049 Regensburg (DE); MAGER, Gerhard, 90556 Cadolzburg (DE); SIEGMAR, Bernhard, 93199 Beucherling (DE)
(86) Internationale Anmeldenummer: PCT/EP2005/055843
(87) Internationale Veröffentlichungsnummer: WO 2006/072495

(56) Entgegenhaltungen:
- DE-A1- 10 031 660
- DE-A1- 10 236 937
- DE-A1- 19 816 749
- US-A- 5 406 173
- US-B1- 6 275 163

## Beschreibung

Die Erfindung betrifft eine Vorrichtung zur Regelung der Helligkeit einer Beleuchtungseinrichtung, insbesondere zur Regelung der Hintergrundbeleuchtung eines Displays in Form einer LC-Anzeigeeinheit für Haushaltsgeräte.

Hintergrundbeleuchtungen für Displays, welche eine gewisse Zeit nach dem Ende eines Programms abgeschaltet werden und durch die Betätigung einer Taste wieder aktiviert werden, sind zum Beispiel von Handydisplays bekannt.

Auf einem entfernten Gebiet, nämlich für Außenbeleuchtungen, sind Bewegungsmelder bekannt, welche bei Annäherung eines Lebewesens bzw. eines Objektes, das eine ähnliche IR-Strahlung (Infrarot-Strahlung) emittiert, wie der Mensch, eine Lichtquelle einschalten. Damit dies nicht auch bei Tageslicht geschieht, ist ein Helligkeitssensor integriert, welcher die Schaltung bei Tag deaktiviert. Der Schaltzeitpunkt, bei welchem der Helligkeitssensor in Abhängigkeit von der Umgebungshelligkeit die Außenbeleuchtung einschalten soll, muss durch den Benutzer manuell eingestellt werden.

Aus Dokument DE 102 36 937 A1 ist bekannt, eine Kommunikationseinrichtung eines Haushaltsgerätes mit einer Anzeigeeinheit in Abhängigkeit von der Anwesenheit eines Benutzers und in Abhängigkeit von der Umgebungshelligkeit einzuschalten. Dazu ist an dem Haushaltsgerät ein Bewegungsmelder angeordnet, durch den die Anwesenheit des Benutzers detektiert wird. Zusätzlich ist der Bewegungsmelder mit einem Lichtsensor wirkverbunden, so dass die Kommunikationseinrichtung oder ein Beleuchtungsmittel erst eingeschaltet wird, wenn die Umgebungshelligkeit eine zusätzliche künstliche Beleuchtung der Anzeigeeinheit erfordert. Der Lichtsensor kann auch zur Steuerung der Strahlungsintensität der Leuchtanzeige verwendet werden.

Aus Dokument US-A-5 406 173 ist eine Steuerung für eine Raumbeleuchtung bekannt, bei der in Abhängikeit von der Anwesenheit einer Person und in Abhängigkeit von der Umgebungshelligkeit die Raumbeleuchtung aktiviert bzw. gedimmt wird.

Insbesondere Hintergrundbeleuchtungen von LCD's (Liquid Chrystal Displays) sind auf den Einsatz bei mittlerer Umgebungshelligkeit optimiert. Bei geringer Umgebungshelligkeit leuchten diese oft zu hell und blenden so den Betrachter.

Ein weiterer Nachteil der bekannten Beleuchtungseinrichtungen besteht darin, dass die Helligkeitssensoren die spektrale Empfindlichkeit des menschlichen Auges, beispielsweise bei Erzeugung der Umgebungshelligkeit durch unterschiedliche Lichtquellen, nicht berücksichtigen. Als Folge davon können solche Beleuchtungseinrichtungen je nach Quelle für die Umgebungshelligkeit für den Betrachter entweder als zu hell oder zu dunkel erscheinen.

Es ist daher Aufgabe der Erfindung eine Beleuchtungseinrichtung, insbesondere als Hintergrundbeleuchtung für Displays zur Verfügung zu stellen, welche sich an die Umgebungshelligkeit derart anpasst, dass ein Blenden des Benutzers vermieden und die Lebensdauer der Beleuchtungseinrichtung bei gleichzeitiger Energieeinsparung verlängert wird.

Diese Aufgabe wird erfindungsgemäß durch eine Vorrichtung zur Regelung der Helligkeit einer Beleuchtungseinrichtung mit einem Sensor zur Erfassung der Anwesenheit eines Benutzers und einem Helligkeitssensor gemäß Anspruch 1 gelöst, bei welcher ein Wechsel zwischen zwei unterschiedlichen Helligkeitswerten der Beleuchtungseinrichtung in Abhängigkeit von der Anwesenheit eines Benutzers und in Abhängigkeit von der Umgebungshelligkeit kontinuierlich erfolgt.

Der Begriff "Helligkeit" kann durch die physikalische Größe "Lichtstärke" näher charakterisiert werden.

Der Begriff "kontinuierlich" bedeutet in diesem Zusammenhang, dass die Erhöhung bzw. die Verminderung der Helligkeit der Beleuchtungseinrichtung allmählich und nicht schlagartig vorgenommen wird. Dabei erfolgt die Helligkeitsanpassung vorzugsweise in einem vorgegebenen Zeitintervall, beispielsweise linear steigend bzw. linear fallend, vergleichbar der Helligkeitsanpassung mittels eines Dimmers. Sie kann auch in kleinen Schritten erfolgen, die der Benutzer noch wahrnimmt. Jedenfalls kann sich sein Auge an die sich verändernde Helligkeit gewöhnen, so dass er sich nicht geblendet fühlt. Neben der Energieeinsparung und des Vermeidens des Blendens eines Benutzers kann dadurch auch die Lebensdauer der Beleuchtungseinrichtung vorteilhaft verlängert werden.

Bei der Beleuchtungseinrichtung handelt es sich vorzugsweise um eine Hintergrundbeleuchtung eines LC-Displays, welches zum Beispiel in herkömmlichen Haushaltgeräten zum Einsatz kommt. Beispiele solcher Haushaltgeräte sind Waschmaschinen, Wäschetrockner, Gargeräte, Geschirrspülmaschinen oder Kühlgeräte. Die erfinderische Regelung der Beleuchtungseinrichtung erfolgt im Allgemeinen während des Betriebs des Gerätes. Eine kontinuierliche Helligkeitszu- bzw. -abnahme der Beleuchtungseinrichtung kann allerdings auch zusätzlich vor oder zu der Inbetriebnahme bzw. beim oder nach dem Abschalten des Gerätes oder einer Umschaltung des Gerätes in einen Stand-by-Modus vorgesehen sein. Dadurch kann der Benutzer jederzeit und nicht nur während des Betriebs den Komfort einer blendfreien Anzeige genießen

Die Helligkeit der Hintergrundbeleuchtung wird an die Umgebungshelligkeit angepasst, um damit das Blenden eines Benutzers, beispielsweise in dunklen Räumen, zu vermeiden. Die Anwesenheit des Benutzers sowie die Umgebungshelligkeit können dabei jeweils mittels eines oder mehrerer Sensoren erfasst werden. Die Reichweite des Sensors zur Erfassung eines Benutzers bzw. der Abstand zum Display, den ein Benutzer erreichen muss, bevor er vom Bewegungssensor erfasst wird, beträgt bevorzugt maximal 4 Meter.

Der Sensor, der die Anwesenheit eines Benutzers vor dem Display erkennt, bevorzugt ein Bewegungssensor, kann ein entsprechendes Signal beispielsweise an eine Datenverarbeitungseinheit übertragen. Sie stellt sicher, dass sich die Hintergrundbeleuchtung des Displays bei Anwesenheit eines Benutzers automatisch ein-und bei Abwesenheit unmittelbar abschaltet. Nach dem Einschalten des Gerätes kann die Hintergrundbeleuchtung allerdings auch für eine gewisse Zeitspanne eingeschaltet bleiben. Der Sensor zur Erfassung der Anwesenheit des Benutzers kann dabei solange . deaktiviert werden. Diese Zeitspanne kann in der Datenverarbeitungseinheit fest vorgegeben oder durch den Benutzer einstellbar sein. Sie kann stufenweise oder stufenlos eingestellt werden. Diese Einstellung kann sowohl durch den Benutzer als auch automatisch je nach Bedarf des jeweiligen Benutzers erfolgen. Zur manuellen Einstellung kann beispielsweise ein entsprechender Schalter am Gerät vorgesehen sein.

Bei transflektiven LC-Displays ist es außerdem möglich, die Hintergrundbeleuchtung bei hoher Umgebungslichteinstrahlung zu dimmen oder ab einer gewissen Umgebungshelligkeit vollständig abzuschalten. Bei anderen Display-Arten, wie zum Beispiel bei transmissiven Displays, bleibt die Hintergrundbeleuchtung des Displays bei hoher Umgebungshelligkeit vorwiegend konstant, kann jedoch bei geringer Umgebungshelligkeit ebenfalls gedimmt werden.

Um die Bedienbarkeit des Displays auch bei einem defekten Sensor zu gewährleisten, kann die Beleuchtungseinrichtung bei einem Ausfall oder Fehler des oder der Sensoren manuell, beispielsweise durch einen Tastendruck, aktiviert werden.

Es können der oder die Sensoren neben der Beleuchtungseinrichtung zusätzlich auch andere Einrichtungen des Gerätes aktivieren. Neben der Hintergrundbeleuchtung können so auch weitere Funktionen des Gerätes durch den Bewegungssensor in Abhängigkeit von der Anwesenheit eines Benutzers aktiviert werden. Dabei können beispielsweise je nach Haushaltgerät die Beleuchtung der Bedienelemente, Trommel- oder Ofeninnenbeleuchtung in vorteilhafter Weise in einen Stand-by-Modus versetzt oder ein- bzw. ausgeschaltet werden. Im Fall von vernetzten Haushaltgeräten ist es auch denkbar, dass sich die Displays und/oder die Funktionen mehrerer oder aller Geräte durch einen Bewegungssensor aktivieren lassen. Dieser kann beispielsweise in einem der Geräte oder extern als eigenes Modul vorgesehen sein. Im letzteren Fall kann der Sensor geeignet sein, mit einer zentralen Steuerung oder Regelung oder den anderen bzw. allen Geräten zu kommunizieren.

Die Regelung der Beleuchtungseinrichtung kann dabei unabhängig von der Art der Lichtquelle erfolgen, welche die Umgebungshelligkeit erzeugt, jedoch erfindungsgemäß abhängig von der Empfindlichkeit des menschlichen Auges.

Die Umgebungshelligkeit kann durch verschiedene Lichtquellen erzeugt werden, zum Beispiel durch Sonne, Leuchtstoff- oder Halogenlampen, deren spektrale Intensitäten sich stark unterscheiden können. Da das menschliche Auge eine spektrale Empfindlichkeit aufweist, welche durch eine V(λ)-Kurve beschreibbar ist, kommt erfindungsgemäß ein Helligkeitssensor zur Anwendung, dessen Signal von der Art der Lichtquelle unabhängig ist und die Empfindlichkeit des menschlichen Auges berücksichtigt. Als derartige Helligkeitssensoren können beispielsweise Photozellen oder Photowiderstände zum Einsatz kommen, da deren spektrale Empfindlichkeit der des menschlichen Auges sehr nahe kommt und insbesondere keine Empfindlichkeit im IR-Bereich des Lichtes aufweist. Es können auch Photodioden als Helligkeitssensor zur Anwendung kommen. Da Photodioden jedoch gerade im Wellenlängenbereich von 750 nm bis 900 nm, also jenseits des sichtbaren Bereichs, sehr empfindlich sind und damit bei der Beleuchtung durch eine Lichtquelle mit hohem IR-Anteil nicht die Empfindlichkeit des Auges nachempfinden, können Photodioden vorteilhaft mit einem Filter eingesetzt werden, der den IR-Anteil des Lichtes absorbiert oder reflektiert.

Das Signal des Helligkeitssensors kann in einen Controller eingelesen werden, welcher beispielsweise Teil einer Datenverarbeitungseinheit ist. Das Signal kann mittels eines A/D-Wandlers (Analog/Digital-Wandler) gewandelt werden. Mittels einer gespeicherten Tabelle, welche eine Zuordnung zwischen gemessenen Spannungswerten und entsprechenden Prozentwerten der PWM-Ansteuerung (Puls-Weiten-Modulation) aufweist, kann das Signal bzw. die gemessene Spannung in den entsprechenden Prozentwert der PWM-Ansteuerung der Hintergrundbeleuchtung "übersetzt" werden. Ändert sich die Umgebungshelligkeit, so muss die PWM-Ansteuerung folglich nicht sprunghaft, sondern kann allmählich angepasst werden. Die Bandbreite des Signals beträgt vorzugsweise 0,2 bis 10 Hz.

Die Regelung der Beleuchtungseinrichtung kann ferner abhängig von der jeweiligen Farbe der Beleuchtungseinrichtung erfolgen. Die prozentuale Ansteuerung der Hintergrundbeleuchtung beispielsweise eines LC-Displays hängt dabei von der Farbe der Hintergrundbeleuchtung ab. Eine entsprechende Tabelle mit Spannungs- und Prozentwerten der PWM-Ansteuerung kann beispielsweise abhängig von der jeweiligen Farbe der Beleuchtungseinrichtung für jedes Display eigens bestimmt und in der Steuerung/Regelung abgelegt bzw. gespeichert werden.

Des weiteren kann die Vorrichtung dafür eingerichtet sein, dass abhängig von der Augenempfindlichkeit eines Benutzers und der maximalen Helligkeit der Beleuchtungseinrichtung einen Basiswert der Helligkeit einstellbar ist. Da sowohl die Empfindlichkeit des menschlichen Auges als auch die Beleuchtungsmittel der Hintergrundbeleuchtung, beispielsweise LEDs (Light Emitting Diodes), Toleranzen aufweisen, kann der Benutzer so per Software einen Grundhelligkeitswert auswählen, relativ zu dem die Hintergrundbeleuchtung geregelt wird. Dieser Grundhelligkeitswert kann abgespeichert werden. Im Fall eines Fehlers kann die Hintergrundbeleuchtung konstant auf diesen Grundhelligkeitswert geregelt werden. Die Software kann zum Beispiel in Form eines Computerprogramms mit Programmcodemitteln auf einem oder mehreren Datenträgern der Datenverarbeitungseinheit gespeichert sein.

Bei der Regelung der Helligkeit kann außerdem entsprechend einer Hystereseschleife erfolgen, so dass geringfügige Schwankungen in der Helligkeit nicht zu einem Flackern des Displays führen.

Die Erfindung betrifft ferner ein Haushaltgerät, welches eine oder mehrere erfindungsgemäße Vorrichtungen aufweist.

Der Helligkeitssensor ist vorzugsweise nahe dem Display, beispielsweise in der Bedienblende des Haushaltgerätes, angeordnet oder direkt in das Display integriert. Der Bewegungssensor kann dabei so ausgerichtet sein, dass er die Richtung erfasst, aus der die Annäherung eines Benutzers zu erwarten ist. Die Ausrichtung des Bewegungssensors auf eine erwartete Annäherungsrichtung eines Benutzers kann dabei, zum Beispiel mittels entsprechender Verstelleinrichtungen, manuell oder automatisch erfolgen. Der Bewegungssensor kann zudem in dem Haushaltgerät oder als eigenständiges Modul vorgesehen sein.

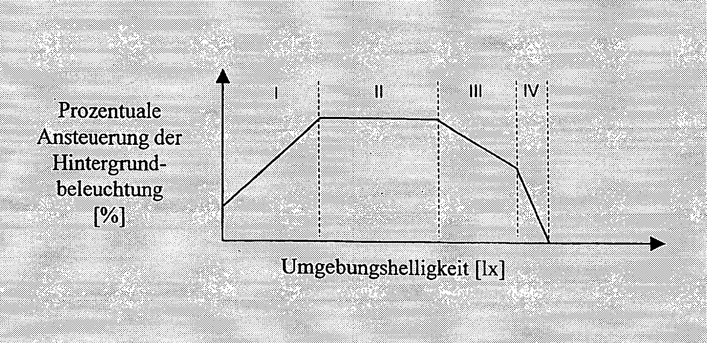

In der beiliegenden Figur ist mittels eines Diagramms beispielhaft die Abhängigkeit der prozentualen Ansteuerung der Hintergrundbeleuchtung von der Umgebungshelligkeit für ein Display dargestellt. Dabei ist die Abszisse mit der "Umgebungshelligkeit" in der Einheit Lux [Ix] und die Ordinate mit der "Prozentualen Ansteuerung der Hintergrundbeleuchtung" in der Einheit Prozent [%] bezeichnet. Um die jeweiligen prozentualen Ansteuerungen der Hintergrundbeleuchtung in Abhängigkeit von der Umgebungshelligkeit besser zu verdeutlichen, wurde die dargestellte Kurve in vier Bereiche I bis IV unterteilt. Die Bereiche sind jeweils mit einer Strichlinie voneinander getrennt.

Bereich I stellt beispielsweise das Einschalten der Hintergrundbeleuchtung bei Erfassung eines Benutzers durch den Anwesenheits- bzw. Bewegungssensor dar. Dabei wird die Hintergrundbeleuchtung nicht schlagartig bzw. sprunghaft auf volle Helligkeit, sondern kontinuierlich, linear ansteigend eingeschaltet. Ausgangswert ist in diesem Fall ein vom Benutzer voreinstellbarer Grundhelligkeitswert der Hintergrundbeleuchtung. Im Falle einer vollständig abgeschalteten Hintergrundbeleuchtung kann bei Erfassung eines Benutzers auch von null als Ausgangswert für das kontinuierliche Einschalten der Hintergrundbeleuchtung ausgegangen werden (nicht dargestellt).

Bereich II zeigt eine mit konstanter Helligkeit eingeschaltete Hintergrundbeleuchtung bei zunehmender Umgebungshelligkeit und anwesendem Benutzer.

In Bereich III ist ein Wechsel von einem Wert hoher Helligkeit zu einem Wert niedrigerer Helligkeit der Hintergrundbeleuchtung dargestellt. Dieser Wechsel erfolgt ebenfalls kontinuierlich, in diesem Fall mit einer kontinuierlich linear abnehmenden prozentualen Ansteuerung der Hintergrundbeleuchtung. Eine solche Absenkung der Helligkeit der Hintergrundbeleuchtung kann beispielsweise bei zunehmender Umgebungshelligkeit vorgesehen sein, da der Benutzer einen so hohen Helligkeitswert der Hintergrundbeleuchtung zum sicheren Ablesen des Displays dann nicht mehr benötigt. Mittels einer solchen Absenkung kann Energie gespart werden.

Der mit IV bezeichnete Bereich stellt das Ausschalten der Hintergrundbeleuchtung dar. Auch in diesem Fall erfolgt der Wechsel von einem bestimmten Helligkeitswert auf Null nicht sprunghaft, sondern kontinuierlich, hier linear fallend. Das mit Bereich IV dargestellte Ausschalten der Hintergrundbeleuchtung kann beispielsweise erfolgen, wenn wie in diesem Fall die Umgebungshelligkeit einen Wert erreicht hat, der eine Hintergrundbeleuchtung des Displays zu dessen sicherem Ablesen überflüssig macht, oder wenn die Abwesenheit des Benutzers durch den Bewegungssensor signalisiert wird.

Es wird abschließend noch einmal darauf hingewiesen, dass es sich bei dem vorhergehenden, detailliert Beschriebenen um ein Ausführungsbeispiel handelt, welches vom Fachmann in verschiedenster Weise modifiziert werden kann, ohne den Bereich der Erfindung zu verlassen. Insbesondere können auch konkrete Ausgestaltungen in anderer Form als in der hier beschriebenen erfolgen. Es wird der Vollständigkeit halber außerdem darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Vorrichtung zur Regelung der Helligkeit einer Beleuchtungseinrichtung für LC-Anzeigeeinheiten in Haushaltgeräten mit einem Sensor zur Erfassung der Anwesenheit eines Benutzers und einem Helligkeitssensor, wobei ein Wechsel zwischen zwei unterschiedlichen Helligkeitswerten der Beleuchtungseinrichtung in Abhängigkeit von der Anwesenheit eines Benutzers und in Abhängigkeit von der Umgebungshelligkeit erfolgt, **dadurch gekennzeichnet, dass** der Wechsel kontinuierlich erfolgt und dass in dem Signal des Helligkeitssensors die spektrale Empfindlichkeit des menschlichen Auges berücksichtigt ist, so dass die Helligkeit der Beleuchtungseinrichtung abhängig von der spektralen Empfindlichkeit des menschlichen Auges regelbar ist.

2. Vorrichtung nach Anspruch 1, **dadurch gekennzeichnet, dass** die Anwesenheit des Benutzers oder die Umgebungshelligkeit mittels eines oder mehrerer Sensoren erfassbar ist.

3. Vorrichtung nach Anspruch 1 oder 2, **dadurch gekennzeichnet, dass** die Zeit, für die die Beleuchtungseinrichtung nach einem Signal eines Sensors eingeschaltet bleibt, stufenweise oder stufenlos einstellbar ist.

4. Vorrichtung nach einem der vorhergehenden Ansprüche, **dadurch gekennzeichnet, dass** bei einem Ausfall oder Fehler des oder der Sensoren die Beleuchtungseinrichtung manuell aktivierbar ist.

5. Vorrichtung nach einem der vorhergehenden Ansprüche, **dadurch gekennzeichnet, dass** mittels des oder der Sensoren zusätzlich weitere Funktionen des Gerätes neben der Beleuchtungseinrichtung aktivierbar sind.

6. Vorrichtung nach einem der vorhergehenden Ansprüche, **dadurch gekennzeichnet, dass** die Beleuchtungseinrichtung unabhängig von der Art der Lichtquelle regelbar ist, welche die Umgebungshelligkeit erzeugt.

7. Vorrichtung nach einem der vorhergehenden Ansprüche, **dadurch gekennzeichnet, dass** die Beleuchtungseinrichtung abhängig von der jeweiligen Farbe der Beleuchtungseinrichtung regelbar ist.

8. Vorrichtung nach einem der vorhergehenden Ansprüche, **dadurch gekennzeichnet, dass** abhängig von der Augenempfindlichkeit eines Benutzers und der maximalen Helligkeit der Beleuchtungseinrichtung ein Basiswert der Helligkeit einstellbar ist.

9. Haushaltgerät mit einer Vorrichtung gemäß einem der Ansprüche 1 bis 8.

## Claims

1. Device for regulating the brightness of lighting equipment for LC display units in domestic appliances, with a sensor for detection of the presence of a user and a brightness sensor, wherein a change between two difference brightness values of the lighting equipment is carried out in dependence on the presence of a user and in dependence on the ambient brightness, **characterised in that** the change takes place continuously and that the spectral sensitivity of the human eye is taken into consideration in the signal of the brightness sensor so that the brightness of the lighting equipment can be regulated in dependence on the spectral sensitivity of the human eye.

2. Device according to claim 1, **characterised in that** the presence of the user or the ambient brightness is detected by one or more sensors.

3. Device according to claim 1 or 2, **characterised in that** the time for which the lighting equipment remains switched on after a signal of a sensor is settable in steps or steplessly.

4. Device according to any one of the preceding claims, **characterised in that** the lighting equipment is manually activatable in the case of a failure or fault of the sensor or sensors.

5. Device according to any one of the preceding claims, **characterised in that** further functions of the apparatus apart from the lighting equipment are additionally activatable by means of the sensor or sensors.

6. Device according to any one of the preceding claims, **characterised in that** the lighting equipment is regulable independently of the kind of light source producing the ambient brightness.

7. Device according to any one of the preceding claims, **characterised in that** the lighting equipment is regulable independently of the respective colour of the lighting equipment.

8. Device according to any one of the preceding claims, **characterised in that** a base value of the brightness is settable in dependence on the eye sensitivity of a user and the maximum brightness of the lighting equipment.

9. Domestic appliance with the device according to any one of claims 1 to 8.

## Revendications

1. Dispositif de réglage de la clarté d'une installation d'éclairage pour afficheurs à cristaux liquides dans des appareils ménagers avec un capteur pour la saisie de la présence d'un utilisateur et un capteur de clarté, dans lequel un changement entre deux valeurs de clarté différentes de l'installation d'éclairage a lieu en fonction de la présence d'un utilisateur et en fonction de la clarté de l'environnement, **caractérisé en ce que** le changement a lieu de façon continue et **en ce que** la sensibilité spectrale de l'oeil humain est prise en compte dans le signal du capteur de clarté de sorte que la clarté de l'installation d'éclairage est réglable en fonction de la sensibilité spectrale de l'oeil humain.

2. Dispositif selon la revendication 1, **caractérisé en ce que** la présence de l'utilisateur ou la clarté de l'environnement est saisissable au moyen d'un ou de plusieurs capteurs.

3. Dispositif selon la revendication 1 ou 2, **caractérisé en ce que** la durée durant laquelle l'installation d'éclairage reste sous tension après un signal du capteur est réglable par paliers ou sans paliers.

4. Dispositif selon l'une des revendications précédentes, **caractérisé en ce que** l'installation d'éclairage est activable manuellement en cas de panne ou de défaut du ou des capteur(s).

5. Dispositif selon l'une des revendications précédentes, **caractérisé en ce que** d'autres fonctions de l'appareil outre l'installation d'éclairage sont activables au moyen du ou des capteur(s).

6. Dispositif selon l'une des revendications précédentes, **caractérisé en ce que** l'installation d'éclairage est réglable indépendamment du type de la source de lumière qui produit la clarté de l'environnement.

7. Dispositif selon l'une des revendications précédentes, **caractérisé en ce que** l'installation d'éclairage est réglable en fonction de la couleur respective de l'installation d'éclairage.

8. Dispositif selon l'une des revendications précédentes, **caractérisé en ce qu'**une valeur de base de la clarté est réglable en fonction de la sensibilité visuelle d'un utilisateur et de la clarté maximale de l'installation d'éclairage.

9. Appareil ménager avec un dispositif selon l'une des revendications 1 à 8.
